# EUROPEAN PATENT APPLICATION

(11) **EP 4 471 968 A1**
(43) Date of publication of application: **04.12.2024**
(21) Application number: 23213579.8
(22) Date of filing: 01.12.2023
(51) Int. Cl.: H01M 50/505, H01M 50/503, H01M 50/213, H01M 50/507, H01M 50/522, H01M 50/526

(54) **BUS BAR, BUS BAR ASSEMBLY AND BATTERY PACK**

(30) Priority: 31.05.2023 CN 202310640809; 31.05.2023 CN 202321375352 U; 31.05.2023 CN 202321375618 U
(71) Applicant: Eve Energy Co., Ltd., Huizhou, Guangdong 516006 (CN)
(72) Inventor: REN, Chaoju, Huizhou, 516006 (CN); LU, Jungao, Huizhou, 516006 (CN); ZHANG, Guojiang, Huizhou, 516006 (CN); JIANG, Jibing, Huizhou, 516006 (CN)
(74) Representative: Herrero & Asociados, S.L.

(57) **Abstract**

The present application provides a bus bar, a bus bar assembly, and a battery pack. The bus bar includes a plurality of working portions arranged and connected in a width direction of a battery module, the working portions is arranged in one-to-one correspondence with rows of cells arranged in a width direction. The working portion includes a positive electrode portion and a negative electrode portion connected to each other. The positive electrode portion is connected to a positive terminal of one of two adjacent cells in a length direction; and the negative electrode portion is connected to a negative terminal of another of the two adjacent cells in the length direction. The positive electrode portion and the negative electrode portion are provided with at least one of glue injection ports communicating with a gap between the two adjacent cells connected by the working portion in series.

## Description

### TECHNICAL FIELD

The present application relates to the technical field of batteries, and more particularly, to a bus bar, a bus bar assembly, and a battery pack.

### BACKGROUND

Most of the existing cylindrical power battery packs have a tendency for module-less development, energy density of the battery is large, and the production efficiency is high. After the cells of the cylindrical power battery are assembled into the case, the cells are connected in series and parallel through bus bars to form a battery module, and finally the battery modules are connected in series. However, long copper bars are difficult to route and arrange in the battery pack, and are generally arranged and extended along the circumference of the inner side of the battery pack. As a result, a large space is occupied, and there is a risk that the copper bars are difficult to install and are easily short-circuited upon squeezing the battery pack.

In addition, in order to improve the robustness of the assembly of the components in the battery pack, foam glue is usually filled in the case after welding the bus bar, to solidify the components and the case into an integral structure. Specifically, the foam glue is foamed in the horizontal direction into the gaps between the cells, the gaps between the battery modules, and the gaps between the battery module and the inner wall of the case. At the same time, the foam glue is foamed in the longitudinal direction. In this process, on the one hand, the gaps between the cells are narrow, so that it is difficult to inject the foam glue in the gaps, causing an uneven foaming; on the other hand, during longitudinal foaming of the foam glue, an upward jacking force in the longitudinal direction is provided to the welded bus bars, and there is a risk that the bus bars and the cells are not welded off.

### SUMMARY

The present application provides a bus bar, applied to a cylindrical power battery module to connect a plurality of rows of cells arranged in a width direction of the battery module in parallel, wherein the bus bar includes a plurality of working portions arranged and connected in the width direction of the battery module, and the plurality of working portions is arranged in one-to-one correspondence with the plurality of rows of cells arranged in the width direction of the battery module; wherein each of the plurality of working portions includes a positive electrode portion and a negative electrode portion connected to each other; the positive electrode portion is connected to a positive terminal of one of two adjacent cells in a length direction of the battery module; and the negative electrode portion is connected to a negative terminal of another of the two adjacent cells in the length direction of the battery module; wherein the positive electrode portion and the negative electrode portion are provided with at least one of glue injection ports communicating with a gap between the two adjacent cells connected by the working portion in series in the length direction of the battery module.

The present application further provides a bus bar assembly includes: a plurality of bus bars described above, wherein the plurality of the bus bars are arranged along the length direction of the battery module and constitute a connection bar assembly; a series bar disposed on an upper side of the connection bar assembly, wherein the series bar is configured to connect two adjacent battery modules in series to constitute a battery pack; a positive electrode bar connected to a positive output terminal of the battery pack, wherein the positive electrode bar is disposed at top of the battery pack; and a negative electrode bar connected to a negative output terminal of the battery pack, wherein the negative electrode bar is disposed at top of the battery pack.

Further, the present application provides a battery pack including the bus bar assembly described above.

### BRIEF DESCRIPTION OF THE DRAWINGS

In order that the technical solution of the embodiments of the present application may be more clearly described, references are made to the accompanying drawings, which are intended to be used in the embodiments and examples. It should be understood that the following drawings illustrate only certain embodiments of the present application and are therefore not to be construed as limiting the scope of the application. Other relevant drawings may be made to those skilled in the art without involving any inventive effort.
FIG. 1 is an exploded view of a battery pack according to some embodiments of the present application;
FIG. 2 is a perspective view of a battery pack according to some embodiments of the present application;
FIG. 3 is a top view of a battery pack according to some embodiments of the present application;
FIG. 4 is a schematic diagram of a mating structure of a plurality of connection bar assembly assemblies according to some embodiments of the present application;
FIG. 5 is a schematic diagram of a mating structure of a positive electrode bar, a negative electrode bar and a series bar according to some embodiments of the present application;
FIG. 6 is an exploded view of a bus bar assembly according to some embodiments of the present application;
FIG. 7 is a partially enlarged view of A in FIG. 6;
FIG. 8 is a partially enlarged view of B in FIG. 6;
FIG. 9 is a perspective view of a bus bar according to some embodiments of the present application;
FIG. 10 is a perspective view of a connection bar assembly according to some embodiments of the present application;
FIG. 11 is a perspective view of a series bar according to some embodiments of the present application;
FIG. 12 is a perspective view of a positive electrode bar according to some embodiments of the present application; and

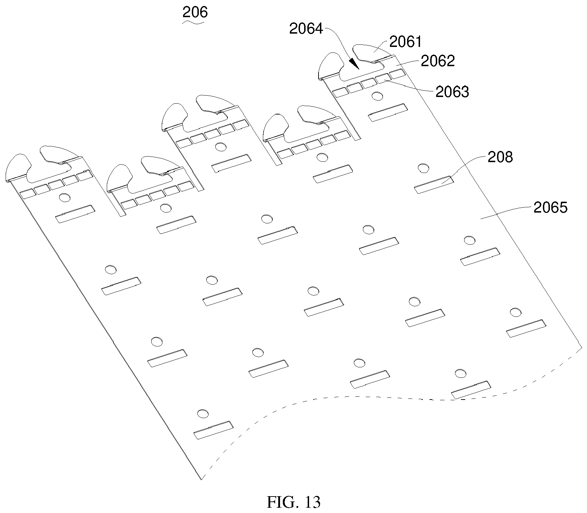

FIG. 13 is a perspective view of a negative electrode bar according to some embodiments of the present application.
reference numerals: 100. battery pack; 101. battery module; 102. cell; 1021. negative terminal; 1022. positive terminal; 201. first insulating layer; 202. bus bar; 2021. positive electrode portion; 2022. negative electrode portion; 2023. avoidance notch; 2024. glue injection port; 2025. weakened hole; 2026. connecting portion; 2027. glue spill hole; 2028. working portion; 2029, bending portion; 203. operation hole; 204. series bar; 205. positive electrode bar; 206. negative electrode bar; 207. second insulating layer; 208. insulating glue injection port; 2054. first body; 2052. first extension portion; 2051. first positive electrode portion; 2053. positive weakened hole; 2065. second body; 2062. second extension portion; 2061. first negative electrode portion; 2063. negative weakened hole; 2064. negative electrode avoidance notch; 209. plate glue injection port; 2041. third body; 2042. positive electrode module; 2043. negative electrode module.

### DETAILED DESCRIPTION OF THE EMBODIMENTS

For a better understanding and practice, the technical solution in the embodiments of the present application is described clearly and completely below in conjunction with the accompanying drawings.

In the description of the present application, it should be noted that the orientation or positional relationship indicated by the terms "up", "down", "front", "rear", "left", "right", "vertical", "horizontal", "top", "bottom", "in", "out" and the like are based on the orientation or positional relationship shown in the drawings. The terms are used merely for easy description, and do not indicate explicitly or implicitly the specific orientation, or the operation and the configuration in the specific orientation. Thus, the above terms are not constructed as a limit to the present application.

In the description of the present application, unless expressly stated and defined otherwise, the terms "first" and "second" are used for descriptive purposes only and are not to be construed as indicating or implying relative importance. The term "a plurality of" refers to two or more. The term "and/or" includes any and all combinations of one or more listed items. In particular, "the" or "one" feature may refer to one of a plurality of these features.

Unless defined otherwise, technical and scientific terminologies used herein have the same meaning as commonly understood by one of ordinary skill in the art. The terminology used in the present application is for the purpose of description only and is not intended to limit the present application. The terms "comprising" and "having" and any variations thereof in the description, the claims, and the drawings are intended to cover non-exclusive inclusion.

Further, in the description of the present application, it should be understood that the reference to "up", "down", "in", "out", and the like is described according to the drawings and should not be construed as limiting the embodiments. It should be understood that, an element or feature is connected "on", "under", "in", "out" another element or feature means that an element or feature is directly connected "on", "under", "in", "out" another element or feature, or an element or feature is indirectly connected "on", "under", "in", "out" another element or feature through an intermediate element.

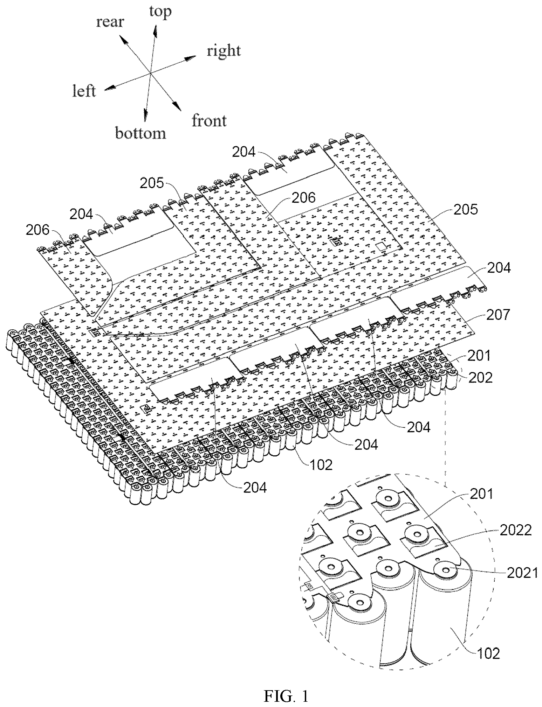

Referring to FIG. 1 to FIG. 10, a bus bar 202 is applied to a cylindrical power battery module 101 for connecting a plurality of rows of cells 102 arranged in width direction of the battery module 101 in parallel.

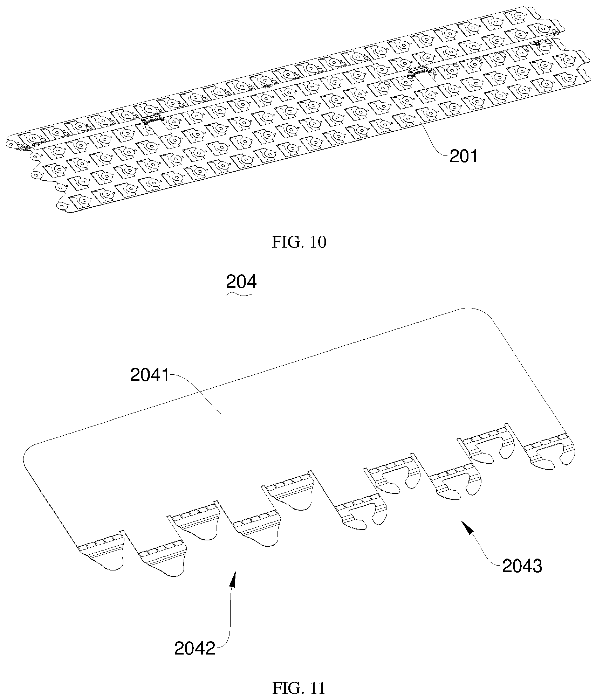

The bus bar 202 includes a plurality of working portions 2028 arranged and connected in the width direction of the battery module 101, and the plurality of working portions 2028 is provided in one-to-one correspondence with a plurality of rows of cells 102 arranged in the width direction of the battery module 101. Each of the working portions 2028 includes a positive electrode portion 2021 and a negative electrode portion 2022 connected to each other. The positive electrode portion 2021 is connected to the positive terminal 1022 of one of the two cells 102 provided adjacent to each other in the length direction of the battery module 101, and the negative electrode portion 2022 is connected to the negative terminal 1021 of the other of the two cells 102 provided adjacent to each other in the length direction of the battery module 101. The positive electrode portion 2021 and/or the negative electrode portion 2022 are provided with a glue injection port 2024 which communicates to the gap between the two cells 102 connected by the working portion 2028 in series along the lengthwise direction of the battery module 101. In this embodiment, as shown in FIG. 1 and FIG. 10, the width direction of the battery module 101 refers to the left-right direction as shown in FIG. 1; and the length direction of the battery module 101 refers to the front-rear direction as shown in FIG. 1.

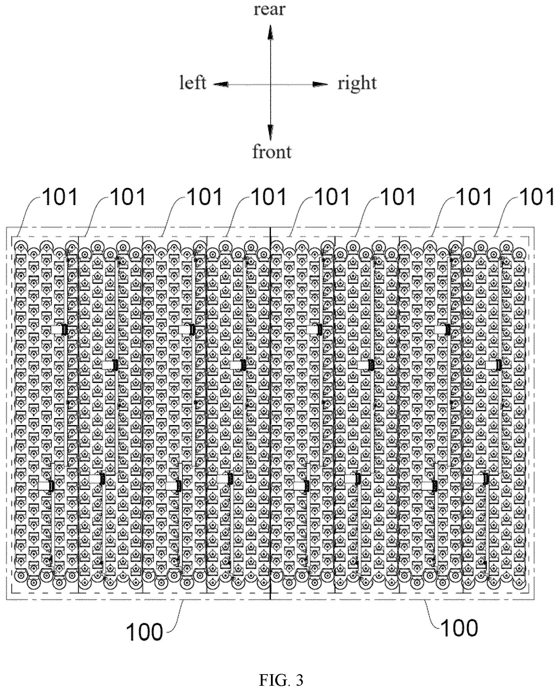

A battery pack is provided, and the battery pack includes eight battery modules 101 as shown in FIG. 3, which constitute two battery packs 100. Further, a row of cells 102 arranged in the length direction of the battery module 101 (that is, arranged in the front-rear direction of the battery pack as shown in FIG. 1) is defined as a battery row, and the battery module 101 includes five battery rows arranged in the left-right direction of the battery pack as shown in FIG. 1. Accordingly, the bus bar 202 may include five working portions 2028 arranged in the width direction of the battery module 101, and the five working portions 2028 corresponds to five battery rows in a same battery module 101. The working portion 2028 is used to connect two adjacent cells 102 in a battery row in series.

In use, specifically, when the bus bar 202 is welded to the cells 102 of the battery module 101, foam glue may be selectively injected into the gaps between two adjacent cells 102 through a glue injection port 2024. As such, the foam glue can be uniformly filled in the gaps between any two adjacent cells 102 while the glue injection efficiency is improved, thereby improving the bonding and fixing quality of the battery module 101. Meanwhile, when the foam glue is foamed in the longitudinal direction, an excessive amount of the foam glue can overflow upward through the glue injection port 2024. As such, the upward jacking force of the foam glue to the bus bar 202 in the longitudinal direction can be greatly reduced, and the risk of welding-off the bus bar 202 and the cell 102 due to foaming of the foam glue can be reduced.

It should be noted that, the foam glue is injected through the glue injection port 2024 at the time that no foam glue is provided in the gap between the corresponding two cells 102 after the foam glue is injected in the conventional mode. It is also possible to directly inject the foam glue into the gap between the two cells 102 through the glue injection ports 2024, which on the one hand, the glue injection efficiency can be improved, and on the other hand, even filling of the foam glue in the gap between any two adjacent cells 102 can be ensured, thereby ensuring the bonding and fixing quality of the battery module 101.

In some embodiments, at least one glue injection port 2024 is provided at the junction of the positive electrode portion 2021 and the negative electrode portion 2022. Since the junction between the positive electrode portion 2021 and the negative electrode portion 2022 is closest to the gap between the two adjacent cells 102 corresponding to the working portion 2028, the glue flows rapidly to the gap between the two adjacent cells 102, thereby facilitating rapid glue injection and glue spill. In some embodiments, the glue injection port 2024 is disposed at the junction between the positive electrode portion 2021 and the negative electrode portion 2022.

In order to further reduce the effect of the foam glue on the welding structure of the bus bar 202 and the cell 102 during the longitudinal foaming process, the positive electrode portion 2021 is provided with a glue spill hole 2027 which communicates to the gap between two cells 102 connected by the working portion 2028 in series along the longitudinal direction of the battery module 101. The glue spill hole 2027 can increase the overflow of the foam glue in addition to the glue injection port 2024 during the glue spill process, and the glue spill hole 2027 can further improve the glue spill efficiency. The glue spill hole 2027 can also overflow excess foam glue as the foam glue is foamed in the longitudinal direction, to prevent the foam glue from raising the bus bar 202 to some extent to cause failure of the welded structure between the bus bar 202 and the cell 102.

In some embodiments, the positive electrode portion 2021 is provided with a weakened hole 2025 therethrough. The weakened hole 2025 here functions as a protection circuit. Specifically, the weakened hole 2025 reduces the over-current area of the working portion 2028. When the battery pack system is short-circuited externally or internally, the temperature of the working portion 2028 rises due to over-current, and the working portion 2028 fuses at the weakened hole 2025. As such, the weakened hole 2025 functions as a fuse. At the same time, at the time of glue injection, the weakened hole 2025 can also serve as a glue injection port, and accordingly, the glue injection port 2024 can also serve as a weakened hole.

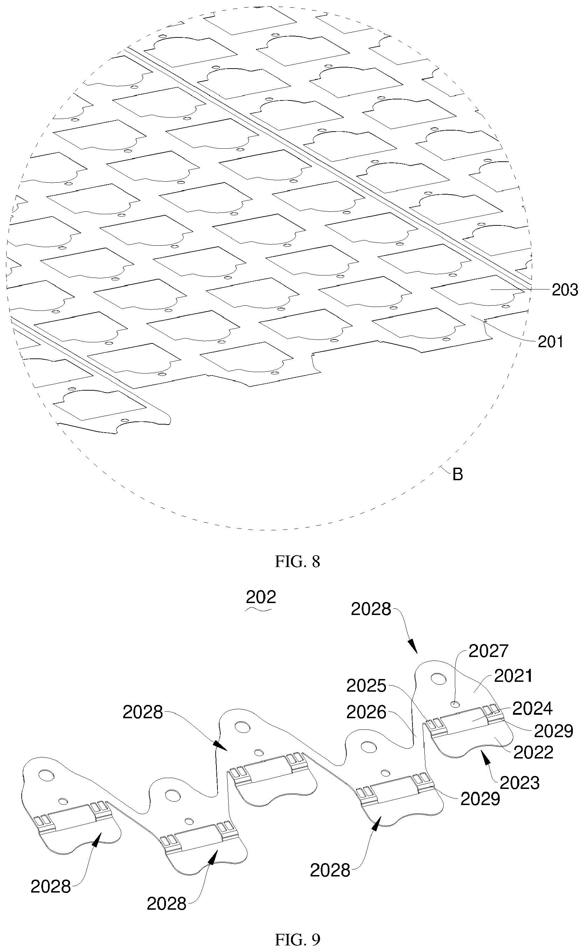

In some embodiments, as shown in FIG. 9, the weakened hole 2025 is provided at a side of the positive electrode portion 2021 adjacent to the negative electrode portion 2022. That is, the weakened hole 2025 is provided close to the junction of the positive electrode portion 2021 and the negative electrode portion 2022, to function as a glue injection port during the glue injection process. Further, the weakened holes 2025 are at both ends of the glue injection port 2024 in the width direction of the bus bar 202. In some embodiments, the weakened holes 2025 on the same working portion 2028 are equally divided into two groups, and the two groups of weakened holes 2025 are symmetrically arranged with respect to the glue injection port 2024. With this arrangement, it is possible to ensure that the overflow areas of the working portion 2028 at both ends of the glue injection port 2024 in the width direction of the bus bar 202 are similar or even equal, so as to ensure that the working portion 2028 at both sides of the glue injection port 2024 in the width direction of the bus bar 202 can be simultaneously fused, thereby improving the safety of the battery pack.

Note that the width direction of the bus bar 202 is parallel to the width direction of the battery module 101.

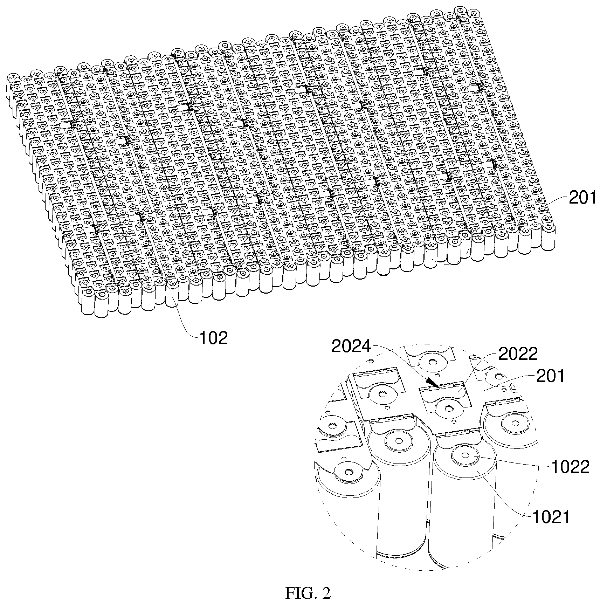

In some embodiments, the positive electrode portion 2021 and the negative electrode portion 2022 are connected by a bending portion 2029. The plane in which the positive electrode portion 2021 is located is higher than the plane in which the negative electrode portion 2022 is located, and the plane in which the positive electrode portion 2021 is located is parallel to the plane in which the negative electrode portion 2022 is located. As shown in FIG. 2, the negative terminal 1021 and the positive terminal 1022 of the cell 102 are each at one end of the cell 102 along the height direction, and the top surface of the positive terminal 1022 is higher than the top surface of the negative terminal 1021. Therefore, the height difference between the bottom surface of the positive electrode portion 2021 of the bus bar 202 and the bottom surface of the negative electrode portion 2022 of the bus bar 202 in the longitudinal direction is equal to the height difference between the top surface of the positive terminal 1022 and the top surface of the negative terminal 1021 in the longitudinal direction.

In some embodiments, an end of the negative electrode portion 2022 away from the positive electrode portion 2021 is provided with an avoidance notch 2023, to keep away from the positive terminal 1022 of the cell 102 connected to the negative electrode portion 2022. As such, the negative electrode portion 2022 can have a larger contact area with the negative terminal 1021 of the cell 102, thereby improving the welding strength of both.

Further, two adjacent working portions 2028 on the same bus bar 202 are connected by a connecting portion 2026. The connection portion 2026 is connected to the positive electrode portion 2021. In some embodiments, the positive electrode portion 2021, the negative electrode portion 2022, the bending portion 2029, and the connecting portion 2026 are integrally stamped.

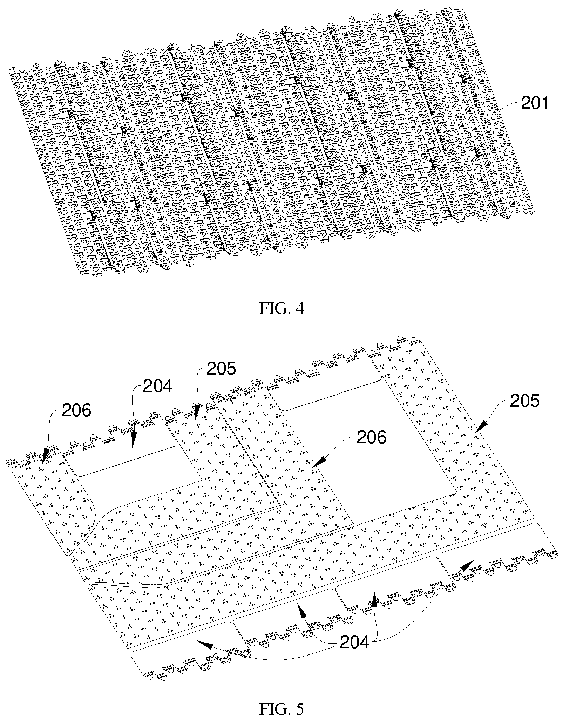

As shown in FIG. 4, FIG. 6, FIG. 8, and FIG. 10, a bus bar assembly is provided, and the bus bar assembly includes a plurality of the bus bars 202 as above, a series bar 204, a positive electrode bar 205, and a negative electrode bar 206. The plurality of bus bars 202 are arranged in the length direction of the battery module 101 and constitute a connection bar assembly. The connection bar assembly is configured to connect two cells 102 arranged adjacent to each other in the length direction in series, and to connect two cells 102 arranged adjacent to each other in the width direction in parallel. The series bar 204 is disposed on the upper side of the connection bar assembly to connect two adjacent battery modules 101 in series to constitute a battery pack 100. The positive bar 205 is connected to the positive output terminal of the battery pack 100, and the positive bar 205 is disposed on the top of the battery pack 100. The negative electrode bar 206 is connected to the negative output terminal of the battery pack 100, and the negative electrode bar 206 is disposed on the top of the battery pack 100.

In some embodiments, as shown in FIG. 1 and FIG. 3, the bus bar assembly provided is applied to a battery pack including eight battery modules 101, corresponding to eight connection bar assemblies, as shown in FIG. 3. The eight battery modules 101 constitute two battery packs 100.

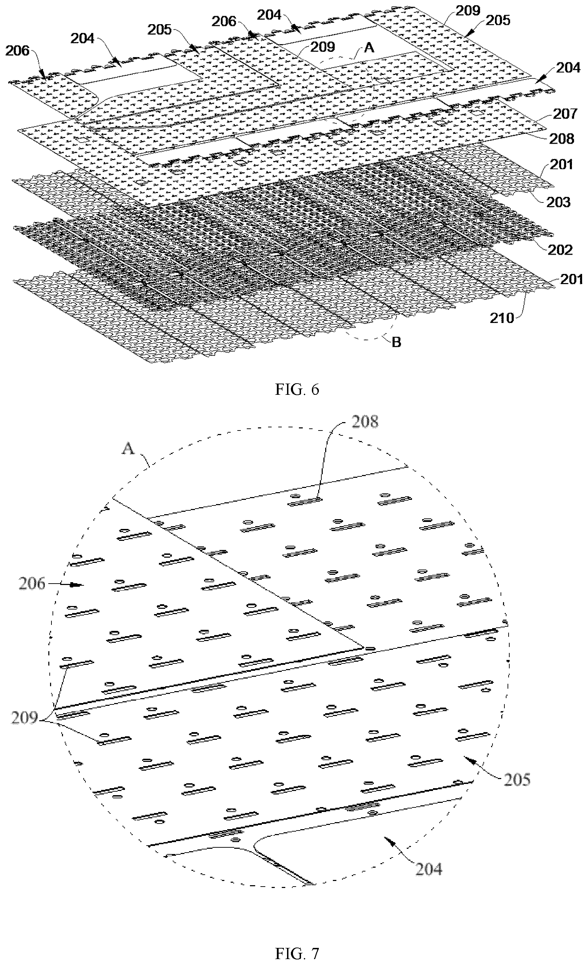

Further, as shown in FIG. 1 and FIG. 6, the bus bar assembly further includes a first insulating layer 201. The first insulating layer 201 is attached to the upper side and the lower side of the connection bar assembly to fix all connection bar assemblies corresponding to the same battery module 101, or to fix all battery modules 101 corresponding to all connection bar assemblies. At least a portion of the positive electrode portion 2021, at least a portion of the negative electrode portion 2022, and at least a portion of the glue injection port 2024 are exposed from the first insulating layer 201. Specifically, an operation hole 203 is provided through the first insulating layer 201, and with two adjacent working portions 2028 along the length direction of the battery module 101, the positive electrode portion 2021 of one of the two adjacent working portions 2028 is exposed from the first insulating layer 201 through the operation hole 203, and the negative electrode portion 2022 of the other one of the two adjacent working portions 2028 is also exposed from the first insulating layer 201 through the operation hole 203.

In some embodiments, the first insulating layer 201 includes, but is not limited to, a PET insulating film. The first insulating layer 201 herein is capable of positioning and securing all the bus bars 202 corresponding to the same connection bar assembly as a whole, meanwhile performing insulation on the upper side and the lower side of the connection bar assembly. The portion of the bus bar 202 exposed from the operation hole 203 is used for welding with nickel sheet of the positive terminal 1022 and the negative terminal 1021 of the cell 102 or the FPC or the collecting wire harness.

As shown in FIG. 1, FIG. 3, FIG. 5, FIG. 6, and FIG. 7, one battery pack 100 provided on the left side is taken as an example for easy description. Four battery modules 101 provided from left to right in the battery pack 100 are sequentially defined as a first module, a second module, a third module, and a fourth module. Specifically, as shown in FIG. 1, the rear end of the first module is the negative output terminal of the battery pack 100, and the rear end of the fourth module is the positive output terminal of the battery pack 100. Under the action of the series bar 204, the front end of the first module and the front end of the second module are connected in series, the rear end of the second module and the rear end of the third module are connected in series, and the front end of the third module and the front end of the fourth module are connected in series.

In some embodiments, the negative electrode bar 206 electrically connected to the negative output terminal of the first module and the positive electrode bar 205 electrically connected to the positive output terminal of the fourth module are high-voltage outputs of the battery pack 100. Here, the positive electrode bar 205, the negative electrode bar 206 and the series bar 204 are all located on the upper side of the bus bar 202. The positive electrode bar 205 and the negative electrode bar 206 are routed at the top of the battery pack 100. As such, the positive output terminal and the negative output terminal of the battery pack 100 can be directly output to a high-voltage connector (not shown) of the battery pack. On the one hand, wiring and layout of the positive electrode bar 205 and the negative electrode bar 206 are facilitated due to the large space at the top of the battery pack 100. On the other hand, the space on the circumference of the battery pack 100 can be saved, to improve energy density of the battery pack. The problem that the battery pack is short-circuited due to the high-voltage copper bar is squeezed can be solved. At the same time, the battery pack provided in some embodiments has a greater buffer space (this is, a space between the battery pack 100 and the inner wall of the case) for squeezing and a higher safety, on the premise that the battery pack has the same space. Meanwhile, since the positive electrode bar 205 and the negative electrode bar 206 are provided at the top of the bus bar 202 or the battery pack 100, the bus bar 202 can provide an upward supporting force to the positive electrode bar 205 and the negative electrode bar 206 in the longitudinal direction (this is, the upper-lower direction as shown in FIG. 1), and the positive electrode bar 205, the negative electrode bar 206, the series bar 204. The bus bar 202 are integrally solidified and molded by means of glue filling in use, which is beneficial for ensuring the structural stability of the connection structure of the positive electrode bar 205 and the negative electrode bar 206 with the battery pack 100, respectively, and further improving the safety of the battery pack.

Further, as shown in FIGS. 1 and 6, the bus bar assembly further includes a second insulating layer 207 between the series bar 204 and the respective connection bar assembly, the positive electrode bar 205 and the respective connection bar assembly, and the negative electrode bar 206 and the respective connection bar assembly. For ease of description, the series bar 204, the positive electrode bar 205, and the negative electrode bar 206 on the upper side of the connection bar assembly are defined as upper high-voltage bars, and a plurality of connection bar assemblies are defined as lower low-voltage bars. Here, the second insulating layer 207 serves to realize insulation between the upper high-voltage bars and the lower low-voltage bars to avoid a short circuit.

In some embodiments, the second insulating layer 207 includes, but is not limited to, a PET insulating film or a plastic sheet.

In some embodiments, the second insulating layer 207 is a plastic insulating plate, and the series bar 204, the positive electrode bar 205 and the negative electrode bar 206 are all disposed on the upper surface of the insulating plate. In a case that the second insulating layer 207 is a plastic insulating plate, the structure of the second insulating layer 207 has a relatively higher strength to support the upper high-voltage bars, thereby facilitating the positioning and mounting of the upper high-voltage bars (that is, the series bar 204, the positive electrode bar 205, and the negative electrode bar 206). Meanwhile, when the foam glue is filled in the case to foam, the plastic insulating plate can act as a pressing plate to limit foaming of the foam glue in the longitudinal direction, thereby facilitating uniform foaming and diffusing of the foam glue in the space under the plastic insulating plate, and improving the bonding quality of the components.

The thickness of the second insulating layer 207 is not greater than 2 mm. In some embodiments, the thickness of the second insulating layer 207 is 1.5 mm. With this arrangement, on the one hand, it is possible to maintain sufficient strength of the second insulating layer 207, and on the other hand, it is possible to effectively control the thickness of the second insulating layer 207, thereby reducing the occupancy at the top of the case.

Further, as shown in FIGS. 6 and 7, a plurality of insulating glue injection ports 208 are provided through the second insulating layer 207, and the insulating glue injection port 208 communicates with the gaps between two adjacent cells 102 correspondingly arranged in the length direction. Here, the foam glue can be injection into the gap between the two adjacent cells 102 through the insulating glue injection port 208 easily and efficiently, thereby ensuring the bonding quality between the cells 102.

In some embodiments, in order to further improve the safety of the battery pack and improve the insulation between the upper high-voltage bar and the lower low-voltage bar, a third insulating layer is coated on the outer sides of the series bar 204, the positive electrode bar 205 and the negative electrode bar 206. A connecting end of the series bar 204, the positive electrode bar 205 and the negative electrode bar 206 are exposed from the third insulating layer, respectively. In some embodiments, the third insulating layer includes, but is not limited to, a PET insulating film. As a result, under the combination of the second insulating layer 203 and the third insulating layer, the insulation between the upper high-voltage bar and the lower low-voltage bar is effectively ensured, and a short circuit between the upper high-voltage bar and the lower low-voltage bar can be effectively prevented.

In some embodiments, the thickness of the positive electrode bar 205 and the thickness of the negative electrode bar 206 are not greater than 1 mm. In some embodiments, the thickness of the positive electrode bar 205, the negative electrode bar 206 and the series bar 204 are all 1 mm. Further, the positive electrode bar 205 and the negative electrode bar 206 are plate bars. In some embodiments, the positive electrode bar 205 and the negative electrode bar 206 are aluminum plate bars or copper plate bars. In some embodiments, the positive electrode bar 205, the negative electrode bar 206 and the series bar 204 are each made of thin aluminum plates. With this arrangement, the upper high-voltage bars take less space in the case along the height direction, and the thin aluminum plate has a relatively better effect on heat dissipation, the safety is high, which provides a high safety, a convenient production, and a low cost.

In some embodiments, as shown in FIG. 11, the positive electrode bar 205 includes a first body 2054, an input terminal of the first body 2054 is provided with a first extension portion 2052, an end of the first extension portion 2052 is provided with a first positive electrode portion 2051, and the first positive electrode portion 2051 is connected to the positive terminal of the cell 102 at the positive output terminal of the battery pack 100. In some embodiments, the input terminal of the first body 2054 is provided with five first extension portions 2052 corresponding to five battery rows of the same battery module 101. In some embodiments, the first positive electrode portion 2051 is welded to the positive terminal of the cell 102 corresponding thereto.

Further, a positive weakened hole 2053 is provided through the first extension portion 2052. The positive weakened hole 2053 can reduce the over-current area of the first extension portion 2052. In a case that the battery pack is short-circuited externally or internally, the structure at the positive weakened hole 2053 is fused to function as a fuse.

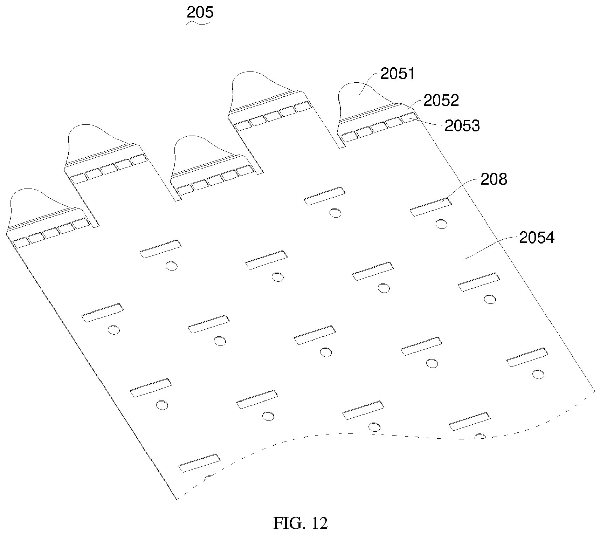

In some embodiments, as shown in FIG. 12, the negative electrode bar 206 includes a second body 2065, an input end of the second body 2065 is provided with a second extension portion 2062, an end of the second extension portion 2062 is provided with a first negative electrode portion 2061, and the first negative electrode portion 2061 is connected to the negative terminal of the cell 102 at the negative output terminal of the negative electrode of the battery pack 100. In some embodiments, the input terminal of the second body 2065 is provided with five second extension portions 2062 corresponding to five battery rows of the same battery module 101. In some embodiments, the first negative electrode portion 2061 is welded to the negative terminal of the cell 102 corresponding thereto. Further, a negative weakened hole 2063 is provided through the second extension portion 2062. The negative weakened hole 2063 can reduce the over-current area of the second extension portion 2062. In a case that the battery pack is short-circuited externally or internally, the structure at the negative weakened hole 2063 is fused to function as a fuse.

In some embodiments, the second extension portion 2062 is provided with a negative electrode avoidance notch 2064, and the negative electrode avoidance notch 2064 extends through the first negative electrode portion 2061. The negative electrode avoidance notch 2064 here serves to avoid the positive terminal of the cell 102 connected to the first negative electrode portion 2061.

In some embodiments, the positive electrode bar 205 and the negative electrode bar 206 each are provided with a plate glue injection port 209 corresponding to the insulating glue injection port 208. Note that, in the longitudinal direction, the insulating glue injection port 208 and the corresponding plate glue injection port 209 are opposite and communicated. That is, the plate glue injection port 209 is exposed from the third insulating layer.

In some embodiments, the plate glue injection port 209 is also provided on the series bar 204. In some embodiments, the plate glue injection port 209 and the corresponding insulating glue injection port 208 on the series bar 204 are aligned and communicated.

Accordingly, the glue injection port 2024 and the corresponding insulating glue injection port 208 are aligned and communicated. Specifically, after the bus bar assembly of the battery pack is installed, the foam glue is injected from the plate glue injection port 209 and the insulating glue injection port 208, and the foam glue passes through the operation hole 203 and the glue injection port 2024 into the gap between two adjacent cells 102. In some embodiments, the positive electrode bar 205 and the negative electrode bar 206 are each provided with a first hole structure which is longitudinally opposite to the glue injection port 2024 and the glue spill hole 2027. As such, the foam glue can be directly injected into the glue injection port 2024 through the first hole structure, after the bus bar assembly is installed. In a case that the foam glue is foamed upward in the longitudinal direction, the foam glue overflowing through the glue spill hole 2027 and the glue injection port 2024 can flow to the upper side of the bus bar 202 through the corresponding first hole structure.

Accordingly, the second insulating layer 207 is also provided with a second hole structure which is longitudinally opposite to the glue injection port 2024 and the glue spill hole 2027, and functions as the first hole structure. The details of the second hole structure are not described herein.

As shown in FIG. 11, the series bar includes a third body 2041, and a positive electrode module 2042 and a negative electrode module 2043 are provided on the same side of the third body 2041. The positive electrode module 2042 is used to be connected to the positive terminal of the corresponding one battery module 101. The negative electrode module 2043 is used to be connected to the negative terminal of the other battery module 101 adjacent to the corresponding one battery module 101. As such, the corresponding one battery module 101 and the other battery module 101 adjacent to the corresponding one battery module 101 are connected in series. In some embodiments, the structure of the positive electrode module 2042 corresponds to the structure of the input terminal of the first body 2054 of the positive electrode bar 205. Accordingly, the structure of the negative electrode module 2043 corresponds to the structure of the input terminal of the second body 2065 of the negative electrode bar 206. Details are not described herein.

The technical solutions of the present application are not limited to the technical solutions disclosed in the above embodiments, but also include the technical solutions of any combination of the above embodiments. It should be noted that several modifications and embellishments may be made by those skilled in the art without departing from the principles of the present application, which are in the scope of the present application.

## Claims

1. A bus bar (202), applied to a cylindrical power battery module (101) to connect a plurality of rows of cells (102) arranged in a width direction of the battery module (101) in parallel, **characterized in that** the bus bar (202) comprises a plurality of working portions (2028) arranged and connected in the width direction of the battery module (101), and the plurality of working portions (2028) is arranged in one-to-one correspondence with the plurality of rows of cells (102) arranged in the width direction of the battery module (101);
wherein each of the plurality of working portions (2028) comprises a positive electrode portion (2021) and a negative electrode portion (2022) connected to each other; the positive electrode portion (2021) is connected to a positive terminal (1022) of one of two adjacent cells (102) in a length direction of the battery module (101); and the negative electrode portion (2022) is connected to a negative terminal (1021) of another of the two adjacent cells (102) in the length direction of the battery module (101);
wherein the positive electrode portion (2021) and the negative electrode portion (2022) are provided with at least one of glue injection ports (2024) communicating with a gap between the two adjacent cells (102) connected by the working portion (2028) in series in the length direction of the battery module (101).

2. The bus bar (202) of claim 1, wherein the glue injection port (2024) is provided at a junction of the positive electrode portion (2021) and the negative electrode portion (2022); the positive electrode portion (2021) is provided with a glue spill hole (2027) and a weakened hole (2025), and the glue spill hole (2027) communicates with the gap between the two adjacent cells (102) connected by the working portion (2028) in series in the length direction of the battery module (101); and the weakened hole (2025) is provided close to the negative electrode portion (2022), and at both ends of the glue injection port (2024) in a width direction of the bus bar (202).

3. The bus bar (202) of claim 1 or 2, wherein the positive electrode portion (2021) and the negative electrode portion (2022) are connected by a bending portion (2029);
wherein a plane in which the positive electrode portion (2021) is located is higher than a plane in which the negative electrode portion (2022) is located, and the plane in which the positive electrode portion (2021) is located is parallel to the plane in which the negative electrode portion (2022) is located.

4. The bus bar (202) of any one of claims 1 to 3, wherein two adjacent working portions (2028) on a same bus bar (202) are connected by a connecting portion (2026);
wherein the connecting portion (2026) is connected to the positive electrode portion (2021).

5. A bus bar assembly, **characterized by** comprising:
a plurality of bus bars (202) of any one of claims 1 to 4, wherein the plurality of the bus bars (202) are arranged along the length direction of the battery module (101) and constitute a connection bar assembly;
a series bar (204) disposed on an upper side of the connection bar assembly, wherein the series bar (204) is configured to connect two adjacent battery modules (101) in series to constitute a battery pack (100);
a positive electrode bar (205) connected to a positive output terminal of the battery pack (100), wherein the positive electrode bar (205) is disposed at top of the battery pack (100); and
a negative electrode bar (206) connected to a negative output terminal of the battery pack (100), wherein the negative electrode bar (206) is disposed at top of the battery pack (100).

6. The bus bar assembly of claim 5, further comprising a first insulating layer (201) and a second insulating layer (207), the first insulating layer (201) is attached to an upper side and a lower side of the connection bar assembly to fix all connection bar assemblies corresponding to a same battery module (101), or fix all connection bar assemblies corresponding to all battery modules (101);
wherein the second insulating layer (207) is disposed between the series bar (204) and a respective connection bar assembly, between the positive electrode bar (205) and a respective connection bar assembly, and between the negative electrode bar (206) and a respective connection bar assembly.

7. The bus bar assembly of claim 5 or 6, wherein the second insulating layer (207) is a plastic insulating plate; the series bar (204), the positive electrode bar (205) and the negative electrode bar (206) are disposed on an upper surface of the plastic insulating plate; and a thickness of the second insulating layer (207) is not greater than 2 mm.

8. The bus bar assembly of claim 6 or 7, wherein a plurality of insulating glue injection ports (208) are provided through the second insulating layer (207), and each of the plurality of insulating glue injection ports (208) is communicated with the gap between two adjacent cells (102) arranged in the length direction corresponding thereto.

9. The bus bar assembly of any one of claims 5 to 8, wherein a thickness of the positive electrode bar (205) and a thickness of the negative electrode bar (206) are not greater than 1 mm.

10. The bus bar assembly of any one of claims 5 to 9, wherein the positive electrode bar (205) and the negative electrode bar (206) are made of aluminum plate bar or copper plate bar.

11. The bus bar assembly of claim any one of claims 5 to 10, wherein the positive electrode bar (205) comprises a first body (2054), an input terminal of the first body (2054) is provided with a first extension portion (2052), an end of the first extension portion (2052) is provided with a first positive electrode portion (2051), and the first positive electrode portion (2051) is connected to a positive terminal of the cell (102) at the positive output terminal of the battery pack (100); wherein the first extension portion (2052) is provided with a positive weakened hole (2053) therethrough.

12. The bus bar assembly of any one of claims 5 to 11, wherein the negative electrode bar (206) comprises a second body (2065), an input terminal of the second body (2065) is provided with a second extension portion (2062), an end of the second extension portion (2062) is provided with a first negative electrode portion (2061), and the first negative electrode portion (2061) is connected to a negative terminal of the cell (102) at the negative output terminal of the battery pack (100); wherein the second extension portion (2062) is provided with a negative weakened hole (2063) therethrough.

13. The bus bar assembly of any one of claims 5 to 12, wherein the series bar (204), the positive electrode bar (205) and the negative electrode bar (206) are each coated with a third insulating layer; and
an connecting end of each of the series bar (204), the positive electrode bar (205) and the negative electrode bar (206) is exposed from the third insulating layer.

14. The bus bar assembly of any one of claims 8 to 13, wherein the positive electrode bar (205) and the negative electrode bar (206) are each provided with a plate glue injection port (209) communicated with the insulating glue injection port (208); and
the connection bar assembly is provided with a glue injection port (2024) communicated with the insulating glue injection port (208).

15. A battery pack, **characterized by** comprising the bus bar assembly of any one of claims 5 to 14.
